# EUROPEAN PATENT SPECIFICATION

(11) **EP 4 296 886 B1**
(45) Date of publication and mention of the grant of the patent: **29.01.2025**
(21) Application number: 23179930.5
(22) Date of filing: 19.06.2023
(51) Int. Cl.: G06K 7/10, G06K 19/07

(54) **ENROLLMENT ASSISTANCE DEVICE WITH CONDUCTOR SPIRAL, BIOMETRIC SYSTEM AND ENROLLMENT METHOD**
REGISTRIERUNGSHILFSVORRICHTUNG MIT LEITERSPIRALE, BIOMETRISCHES SYSTEM UND REGISTRIERUNGSVERFAHREN
DISPOSITIF D'AIDE À L'INSCRIPTION AVEC SPIRALE CONDUCTRICE, SYSTÈME BIOMÉTRIQUE ET PROCÉDÉ D'INSCRIPTION

(30) Priority: 23.06.2022 SE 2250779
(43) Date of publication of application: 27.12.2023
(73) Proprietor: Fingerprint Cards Anacatum IP AB, 411 19 Göteborg (SE)
(72) Inventor: HAMMERSBERG, Johan, 448 36 Floda (SE); ASAD, Muhammad, 463 71 Lödöse (SE)
(74) Representative: Kransell & Wennborg KB

(56) References cited:
- US-A1- 2018 294 845
- US-B2- 11 113 593

## Description

### Field of the Invention

The present invention relates to an enrollment assistance device, for facilitating biometric enrollment of a user of a contactless smartcard including a biometric arrangement, and to a method of enrolling the user.

### Background of the Invention

Biometric arrangements are widely used as means for increasing the convenience and security of personal electronic devices, such as mobile phones etc. Fingerprint sensing arrangements, in particular, are now included in a large proportion of all newly released personal communication devices, such as mobile phones.

Lately, efforts have also been made to introduce biometric arrangements, such as fingerprint sensing arrangements, in other devices that may have less computing power and/or available energy. Examples of such other devices are so-called smartcards, door locks, and devices in the so-called internet of things (IoT) category etc.

It is, however, challenging to provide for secure, reliable, and convenient biometric enrollment of a user of such biometric arrangements. For instance, it may be desirable to guide the user during the enrollment, which is complicated by the fact that some devices with biometric arrangements may lack a user interface, or may have only rudimentary means for interacting with the user. For example, a biometrically enabled smartcard may typically have no user interface integrated in the smartcard.

For a contactless smartcard, US 2020/0327533 proposes to power and communicate with the smartcard during enrollment using the user's mobile device. To aid the user in correctly positioning the smartcard in relation to the mobile device, US 2020/0327533 discloses that a visual marker is displayed on the screen of the mobile device to guide the user to correctly arrange the smartcard on the backside of the mobile device during the enrollment procedure.

It appears to be potentially cumbersome for the user to press the smartcard against the backside of the mobile device, while attempting to enroll one or more fingers, and at the same time follow instructions and guidance provided on the display on the frontside of the mobile device.

It would therefore be desirable to provide for more user-friendly enrollment in a biometrically enabled contactless smartcard.

US 2018/0294845 A1 relates to the recharging of microcircuit cards (smartcards) equipped with a rechargeable battery and with a near field communication antenna. US 2018/0294845 A1 discloses a case with a flap for a portable phone, including, in the case; at least one housing intended to receive a microcircuit card; and at least one first contactless communication antenna, the first antenna being electrically connected to a second antenna placed in a base of the case.

US 11 113 593 B2 relates to smartcards (SC) having a metal layer (ML) or metal card body (MCB) and a module opening (MO) for a transponder chip module (TCM). A slit (S) or notch (N) in the metal card body may extend from a peripheral edge of a metal layer or card body, without extending to the module opening. A flexible circuit (FC) with one or two patch antennae (PA) or sense coils (SeC) connected to a coupling loop structure (CLS) with an antenna structure (AS) on the same substrate may be incorporated into the card body (CB). A fingerprint sensing module comprising an electrically-conductive metal bezel housed in the card may be electrically isolated from the metal layer or metal card body by the application of coatings (DLC) or anodizing (oxidizing) the respective metal surfaces. The cards may be contactless only, contact only, or dual-interface (contact and contactless).

### Summary

In view of above-mentioned and other drawbacks of the prior art, it is an object of the present invention to provide for improved, in particular more user-friendly, enrollment in a biometrically enabled contactless smartcard.

According to a first aspect of the present invention, it is therefore provided an enrollment assistance device as defined by claim 1.

It should be noted that the conductor spiral provides for wireless coupling with both the mobile phone and the contactless smartcard, and that this may be achieved without any conductor crossing in the enrollment assistance device.

The present invention is based upon the realization that enrollment in a biometrically enabled contactless smartcard can be improved by utilizing wireless power transfer from a mobile phone and facilitating arrangement of the contactless smartcard in relation to the mobile phone, so that the user is not required to actively hold the smartcard in relation to the mobile phone during the enrollment procedure.

The present inventors have further realized that this can be achieved by providing an enrollment assistance device having a carrier and a conductor spiral supported by the carrier and being configured to form a first wireless power transfer link with a wireless power transfer arrangement of the mobile phone when the mobile phone is arranged on a first surface portion of the carrier, and a second wireless power transfer link with a wireless power transfer arrangement of the contactless smartcard when the contactless smartcard is arranged on a second surface portion of the carrier. Hereby, power can be transferred from the mobile phone to the contactless smartcard via the conductor spiral supported by the carrier.

Embodiments of the present invention allow the contactless smartcard and the mobile phone to be arranged so that the user has easy access to a biometric sensor, such as a fingerprint sensor, on the smartcard during the entire enrollment procedure.
The user can also be guided during the enrollment, using the GUI of the mobile phone. This may provide for a shorter and more convenient enrollment procedure, and may also result in a higher quality of the enrolled biometric template.

Furthermore, the configuration with a carrier and a an electrical conductor supported by the carrier and forming a conductor spiral having an innermost revolution starting at a first conductor end and an outermost revolution ending at a second conductor end, provides the desired wireless power transfer without the need for any crossing conductors in the enrollment assistance device.

This in turn provides for the production of enrollment assistance devices which are relatively inexpensive and environmentally friendly, since there is no need for a battery or conventional cabling etc., and since there is no need for conductive connections between layers. In embodiments, the enrollment assistance device according to the present invention can be made as a single layer device, including a single conductor layer.

The enrollment assistance device according to embodiments of the present invention can be distributed to users together with, or separate from, a contactless smartcard with a biometric arrangement, with reduced cost and environmental impact.

In embodiments, the enrollment assistance device may be provided in the form of a sheet having the electrical conductor forming the conductor spiral provided on, or embedded in, the sheet. The sheet may at least partly be made of paper.

The enrollment assistance device may, furthermore, be included in a biometric system, further comprising a contactless smartcard including a biometric arrangement and a wireless power transfer arrangement, wherein the contactless smartcard is arranged on the second surface portion of the carrier of the enrollment assistance device.

According to a second aspect of the present invention, there is provided a method defined by claim 10.

In embodiments, the method may further comprise the steps of performing a user authentication using the mobile phone; and allowing completion of the biometric enrollment only if the user authentication is successful.

The user authentication using the mobile phone may, for example, involve inputting a password, a PIN, or an OTP to the mobile phone, or performing biometric authentication using the mobile phone. Following a successful authentication, the biometric enrollment functionality of the contactless smartcard may be unlocked by a signal provided by the mobile phone to the contactless smartcard. Such a procedure is, per se, well-known to the person skilled in the relevant art.

Alternatively, enrollment in the contactless smartcard may be performed before the above-mentioned user authentication is carried out, and the contactless smartcard may be locked or the enrolled biometric information may be erased if the subsequent user authentication fails or is not performed.

The method according to embodiments of the present invention may advantageously, at least partly, be carried out by a computer program (such as an app) that is run on the mobile phone. Such a computer program may, for example, be provided to the user by the party issuing the contactless smartcard. The contactless smartcard may, for example, be a dual interface smartcard.

### Brief Description of the Drawings

These and other aspects of the present invention will now be described in more detail, with reference to the appended drawings showing example embodiments of the invention, wherein:
Fig 1A is an illustration of an exemplary biometrically enabled contactless smartcard;
Fig 1B is a schematic view of the smartcard in fig 1A, when delaminated to reveal functional parts of the smartcard;
Fig 2 is a schematic illustration of a biometric system, including an enrollment assistance device according to a first example embodiment of the present invention, with a mobile phone and the contactless smartcard in fig 1A arranged thereon;
Fig 3 schematically shows the enrollment assistance device according to the first example embodiment of the invention, without the mobile phone and the contactless smartcard;
Fig 4 is a schematic illustration of a biometric system, including an enrollment assistance device according to a second example embodiment of the present invention, with a mobile phone and the contactless smartcard in fig 1A arranged thereon;
Fig 5 schematically shows the enrollment assistance device according to the second example embodiment of the invention, without the mobile phone and the contactless smartcard; and
Fig 6 is a flow-chart illustrating a method according to an example embodiment of the present invention.

### Detailed Description of Example Embodiments

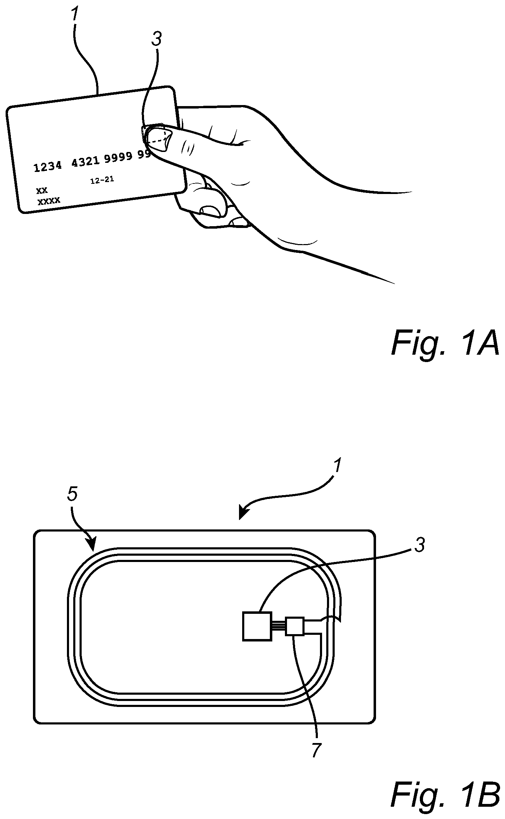

Fig 1A schematically illustrates an exemplary contactless smartcard 1 including a biometric arrangement 3, here in the form of a fingerprint sensor module. The contactless smartcard 1 may, for example, be a biometrically enabled payment card, and payments may be authorized by biometrically authenticating the user, as is schematically indicated in fig 1A. Of course, a payment card such as that shown in fig 1A is not the only kind of biometrically enabled contactless smartcard for which embodiments of the present invention may be useful. Examples of other kinds of biometrically enabled contactless smartcards may include access cards, storage cards, identity cards, etc.

As is schematically shown in fig 1B, the smartcard 1 additionally comprises a wireless power transfer arrangement 5, and, in this particular embodiment, a secure element 7. The wireless power transfer arrangement 5 may be used for harvesting electrical power from a time-varying electrical field, and for wirelessly communicating with a remote device, such as a card reader (not shown), typically through load modulation. The secure element 7 may, for example, contain information for authorizing a transaction, and is connected to the biometric arrangement 3. When the user is authenticated by the biometric arrangement 3 (or by the biometric arrangement 3 in cooperation with the secure element 7), the information contained in the secure element 7 may be unlocked and allowed to be wirelessly communicated to the remote device via the wireless power transfer arrangement 5.

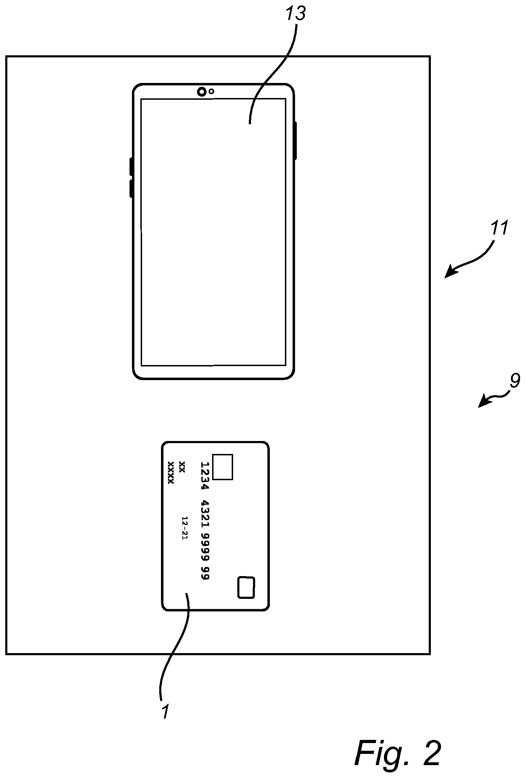

Fig 2 is a schematic illustration of a biometric system 9, including an enrollment assistance device 11 according to an example embodiment of the present invention, and the contactless smartcard 1 in fig 1A arranged on, such as fixed on, a predefined second surface portion of the enrollment assistance device 11. In appearance, the biometric system 9 in fig 2 may be similar to the letter sent by an issuer of a smartcard to a user, but the enrollment assistance device 11 taking the place of an ordinary sheet of paper in such a letter can assist the user to effortlessly perform a biometric enrollment using the biometric arrangement 3 of the contactless smartcard 1. The contactless smartcard 1 may, for example, be fixed by a suitable adhesive, may be inserted in a sleeve comprised in the enrollment assistance device 11, or may be loosely arranged on the predefined second surface portion.

In fig 2, a mobile phone 12 is indicated as being placed on a predefined location on the enrollment assistance device 11, for wirelessly powering the contactless smartcard 11 during the above-mentioned biometric enrollment.

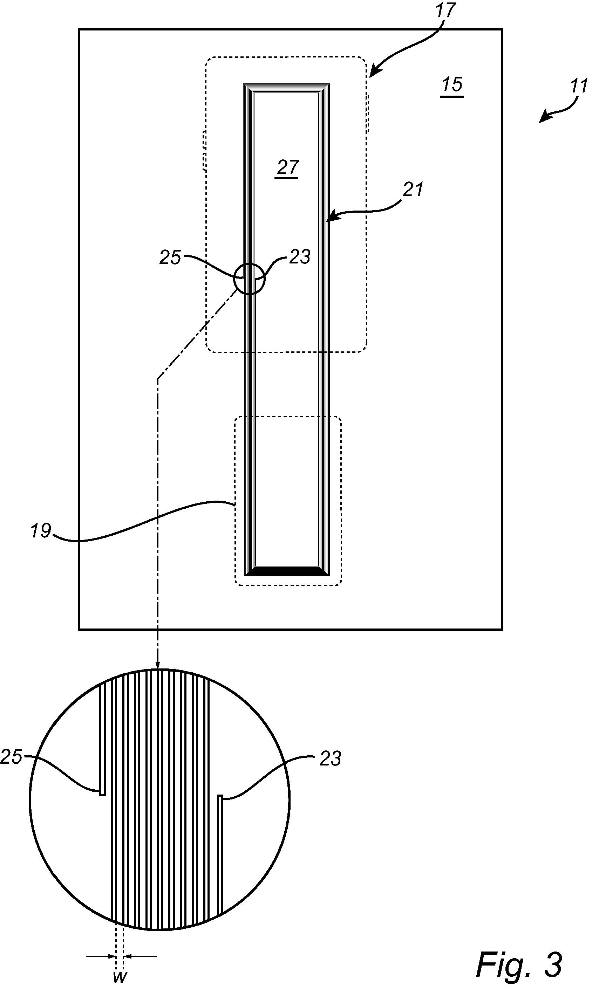

Fig 3 schematically shows the enrollment assistance device according to the first example embodiment of the invention, without the mobile phone and the contactless smartcard. The enrollment assistance device 11 comprises a carrier 15 having a first surface portion 17 and a second surface portion 19 spaced apart from the first surface portion 17. The first surface portion 17 is for arrangement of a mobile phone 13, and the second surface portion 19 is for arrangement of a contactless smartcard 1. With continued reference to fig 3, the enrollment assistance device 11 further comprises an electrical conductor supported by the carrier 15 and forming a conductor spiral 21. The conductor spiral 21 has an innermost revolution starting at a first conductor end 23 and an outermost revolution ending at a second conductor end 25. Referring to the enlarged portion of fig 3, the number of revolutions of the conductor spiral 21 between the first conductor end 23 and the last conductor end 25, may advantageously be 5 to 15, and the spacing w between adjacent conductors in the conductor spiral 21 may be in the range 0.05 mm to 0.5 mm.

The conductor spiral 21 is configured to form a first wireless power transfer link with the wireless power transfer arrangement (not shown) of the mobile phone 13 when the mobile phone is arranged on the first surface portion 17 of the carrier 15, and a second wireless power transfer link with the wireless power transfer arrangement 5 (in fig 1B) of the contactless smartcard 1 when the contactless smartcard is arranged on the second surface portion 19 of the carrier 15.

The outermost revolution of the conductor spiral 21 - the revolution ending at the second conductor end 25 - circumscribes a third surface portion 27 of the carrier, which may at least partly overlap with the first surface portion 17 of the carrier 15 and the second surface portion 19 of the carrier 15. For satisfactory coupling efficiency between the wireless power transfer arrangement 5 of the contactless smartcard 1 and the conductor spiral 21, the present inventors have found that it may be beneficial to arrange the conductor spiral 21 and the second surface portion 19 of the carrier 15 in such a way that at least 70% of the second surface portion 19 overlaps with the third surface portion 27. Concerning the coupling with the wireless power transfer arrangement of the mobile phone 13, the conductor spiral 21 may advantageously be configured such that the wireless power transfer arrangement of the mobile phone 13 completely overlaps with (fits within) the third surface portion 27, when the mobile phone 13 is optimally arranged within the second surface portion of the carrier 15.

Although the conductor spiral 21 is schematically indicated in fig 3 as being generally rectangular, it should be noted that this need not be the case, and that the conductor spiral may have a different outline, such as elliptical, etc. The carrier 15 may advantageously be cellulose-based, for minimum environmental impact, but could alternatively, or in combination, be made of a plastic material, which may be recycled and/or manufactured without the use of fossil material.

The conductor spiral 21 may be printed using conductive ink or paste using per se known techniques. Alternatively, the conductor spiral 21 may be pre-formed on a sticker, which may be attached to the carrier 15. The conductor spiral 21 may be covered by a dielectric layer, such as a thin plastic layer.

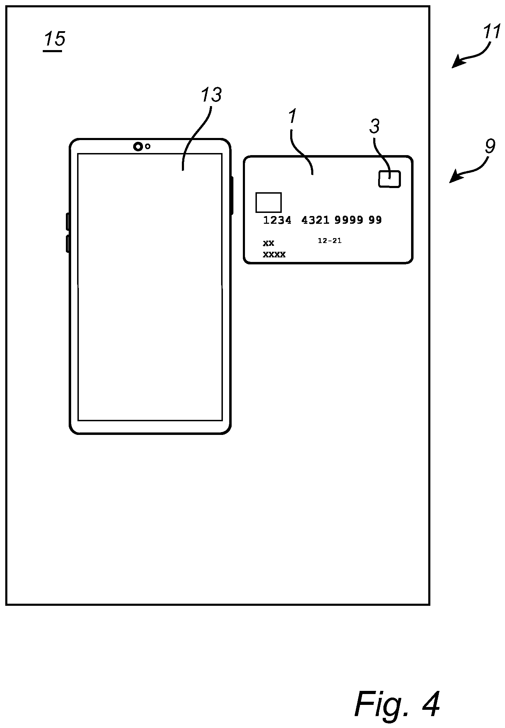

Fig 4 is a schematic illustration of a biometric system 9, including an enrollment assistance device 11 according to a second example embodiment of the present invention, with a mobile phone 13 and the contactless smartcard 1 in fig 1A arranged thereon. In fig 4, the mobile phone 13 and the contactless smartcard 1 are arranged next to each other and with different orientations. As will be explained further below, the reason for this is to simplify for the user to align the wireless power transfer arrangement of the mobile phone 13 (the exact location of which is typically unknown to the user) with the conductor spiral comprised in the enrollment assistance device 11.

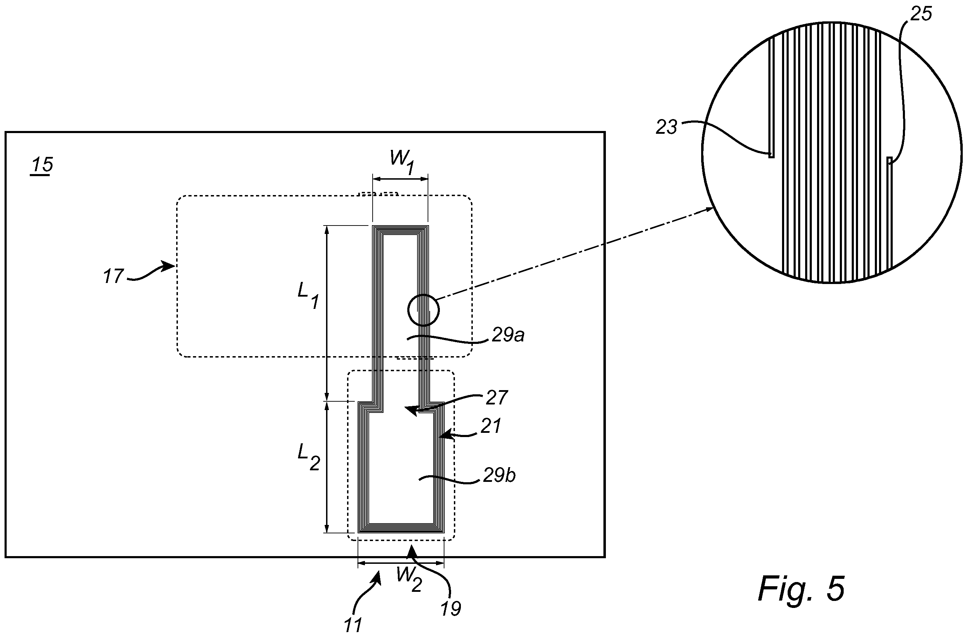

Fig 5 schematically shows the enrollment assistance device 11 according to the second example embodiment of the invention, without the mobile phone and the contactless smartcard. As is indicated in fig 5, the third surface portion 27 of the carrier 15, circumscribed by the outermost revolution of the conductor spiral 21, has a first elongated sub-portion 29a with a first width W₁ and a first length L₁, and a second elongated sub-portion 29b with a second width W₂ and a second length L₂. The second width W₂ is greater than the first width W₁. The second elongated sub-portion 29b is optimized for a contactless smartcard 1 with standardized dimensions and specifications of the wireless power transfer arrangement 5 (in fig 1B). In the present second example configuration of the enrollment assistance device 11, the length L₁ of the first elongated sub-portion 29a is greater than the widths of the mobile phones 13 for which the enrollment service is supported.

It may be challenging to achieve correct arrangement of the mobile phone 13 in relation to the conductor spiral 21, since different mobile phones 13 may have wireless power transfer arrangements with different configurations (size and/or shape) and arrangement in the mobile phone 13. To accommodate as many different mobile phones 13 as possible with minimum effort to the user, the first conductor spiral 21 may be dimensioned to simplify optimal arrangement of the mobile phone 13. In the illustrative example in fig 4 and fig 5, the configuration of the first elongated sub-portion 29a allows the user to find the optimal arrangement by movement of the mobile phone 13 in the longitudinal direction of the enrollment assistance device 11.

Alternatively, or in combination, to facilitate correct placement of the mobile phone 13, the carrier 15 may therefore be provided with at least one indicium for guiding the user to correctly arrange the mobile phone 13 on the first portion 17 of the carrier 15, in relation to the first conductor spiral 21. The at least one indicium may, for instance, comprise a number of outlines corresponding to the physical outlines of the most common mobile phones 13.

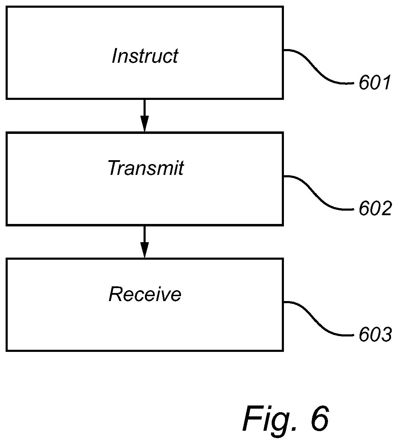

A method according to an embodiment of the present invention will now be described with reference to the flow-chart in fig 6, and with additional reference to other figures as indicated. When the method is carried out, the user has a biometric system 9 such as that described above with reference to fig 2 and fig 4. The biometric system 9, including the enrollment assistance device 11 and the contactless smartcard 1 arranged on the second surface portion 19 of the carrier 15 may have been sent to the user by mail from the issuer of the card, such as a financial institution or the like. The user is also in possession of a mobile phone 13, including a wireless power transfer arrangement arranged to provide an electric field for power transfer adjacent to a backside of the mobile phone, and a display arranged on a frontside of the mobile phone 13.

In a first step 601, the user is instructed to arrange the mobile phone 13 on the first surface portion 17 of the carrier 15 of the enrollment assistance device 11 comprised in the biometric system 9, with the backside of the mobile phone 13 facing the first surface portion 17. The instructing step may include providing guidance to the user. Such guidance may, for example, be included in the biometric system 9 that is provided to the user. For instance, written and/or graphical guidance may be printed on the carrier 15. As was mentioned above, such graphical guidance may include outlines of popular mobile phones, etc.

Alternatively, the user may be guided by controlling the mobile phone 13 to provide an alignment pattern on the display of the mobile phone 13. The alignment pattern on the display may be aligned with the at least one indicium on the carrier 15.

In the subsequent step 602, the mobile phone 13 transmits, to the contactless smartcard 1 a signal encoding an instruction to the contactless smartcard 1 to start to perform biometric enrollment. The signal is transmitted wirelessly to the contactless smartcard 1, and may be transmitted, using per se known techniques for near field communication (NFC), transmitted via the conductor spiral 21 comprised in the enrollment assistance device 11. Alternatively, this signal may be wirelessly transmitted using another wireless communication link, such as using low-power radio transmission.

During the enrollment procedure, the user may be guided by instructions and/or illustrations provided on the display of the mobile phone 13. Such instructions and/or illustrations may be based on information provided wirelessly from the contactless smartcard 1 to the mobile phone 13. For instance, the user may be instructed in respect of finger placement and/or receive information about the status of the enrollment procedure.

When the enrollment procedure has been completed, as determined by the biometric arrangement 3 of the contactless smartcard 1, the mobile phone 13 receives, in step 603, a signal indicating that the enrollment has been completed. The signal indicating that the enrollment has been completed may be received via the conductor spiral 21 comprised in the enrollment assistance device 11.

In embodiments, the ability to successfully finalize the enrollment and enable use of the biometric capabilities of the contactless smartcard 1 may be conditional on a user authentication performed using the mobile phone 13. This may particularly be the case for a so-called initial enrollment, where no biometric template is stored on the smartcard. In such embodiments, the mobile phone 13 may locally carry out the user authentication, for example using a fingerprint sensor or other biometric arrangement comprised in the mobile phone 13. Alternatively, the mobile phone 13 may be used as an input device for input of a code, such as a password, PIN or OTP, for transmission to a remote server for authentication there.

In embodiments, the signal encoding a (correct) instruction to the contactless smartcard 1 to start to perform the enrollment may only be sent if a successful user authentication has first been performed. In other embodiments, the enrollment may be carried out, but the generated biometric template may be discarded, or the biometric capabilities of the smartcard 1 may be locked unless a successful user authentication is performed.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An enrollment assistance device (11), for facilitating biometric enrollment of a user of a contactless smartcard (1) including a biometric arrangement (3) and a wireless power transfer arrangement (5), the enrollment assistance device (11) comprising:
a carrier (15) having a first surface portion (17) for arrangement of a mobile phone (13) including a wireless power transfer arrangement, and a second surface portion (19), spaced apart from the first surface portion (17), for arrangement of the contactless smartcard (1); and **characterized by**
an electrical conductor supported by the carrier (15) and forming a conductor spiral (21) having an innermost revolution starting at a first conductor end (23) arranged inside the conductor spiral (21) and an outermost revolution ending at a second conductor end (25),
the conductor spiral (21) being configured to form a first wireless power transfer link with the wireless power transfer arrangement of the mobile phone (13) when the mobile phone is arranged on the first surface portion (17) of the carrier, and a second wireless power transfer link with the wireless power transfer arrangement (5) of the contactless smartcard (1) when the contactless smartcard (1) is arranged on the second surface portion (19) of the carrier (15).

2. The enrollment assistance device (11) according to claim 1, wherein:
the outermost revolution of the conductor spiral circumscribes a third surface portion (27) of the carrier (15); and
the third surface portion of the carrier overlaps with the first surface portion (17) of the carrier and the second surface portion (19) of the carrier (15).

3. The enrollment assistance device (11) according to claim 2, wherein the third surface portion (27) of the carrier is rectangular.

4. The enrollment assistance device (11) according to claim 2 or 3,
wherein the third surface portion (27) of the carrier (15) has a first elongated sub-portion (29a) with a first width (W1) and a second elongated sub-portion (29b) with a second width (W2), greater than the first width (W1).

5. The enrollment assistance device (11) according to claim 4, wherein the first elongated sub-portion (29a) overlaps with the first surface portion (17) of the carrier (15) and the second elongated sub-portion (29b) overlaps with the second surface portion (19) of the carrier.

6. The enrollment assistance device (11) according to any one of the preceding claims, wherein the conductor spiral (21) is printed on the carrier (15).

7. The enrollment assistance device (11) according to any one of the preceding claims, wherein the carrier (15) is provided in the form of a sheet.

8. The enrollment assistance device (11) according to any one of the preceding claims, wherein the carrier (15) is cellulose-based.

9. A biometric system (9) comprising:
the enrollment assistance device (11) according to any one of the preceding claims; and
a contactless smartcard (1) including a biometric arrangement (3) and a wireless power transfer arrangement (5),
wherein the contactless smartcard (1) is arranged on the second surface portion (19) of the carrier of the enrollment assistance device (11).

10. A method of enrolling a user having the biometric system (9) according to claim 9, and a mobile phone (13) including a wireless power transfer arrangement arranged to provide an electric field for power transfer adjacent to a backside of the mobile phone (13), and a display arranged on a frontside of the mobile phone (13), the method comprising the steps of:
guiding (601) the user to arrange the mobile phone (13) on the first surface portion (17) of the carrier (15) of the enrollment assistance device (11) comprised in the biometric system (9), with the backside of the mobile phone (13) facing the first surface portion (17);
transmitting (602), by the mobile phone (13) to the contactless smartcard (1) arranged on the second surface portion (19) of the carrier (15), a signal encoding an instruction to the contactless smartcard (1) to start to perform biometric enrollment; and
receiving (603), by the mobile phone (13) from the contactless smartcard (1) arranged on the second surface portion (19) of the carrier (15), after the biometric enrollment has been completed, a signal indicative of completion of the biometric enrollment.

11. The method according to claim 10, wherein:
the signal encoding the instruction to the contactless smartcard (1) to perform biometric enrollment is transmitted via the conductor spiral (21) comprised in the enrollment assistance device (11) included in the biometric system (9); and
the signal indicating that the enrollment has been completed is received via the conductor spiral (21) comprised in the enrollment assistance device (11) included in the biometric system (9).

12. The method according to claim 10 or 11, further comprising the steps of:
performing a user authentication using the mobile phone (13); and
allowing completion of the biometric enrollment only if the user authentication is successful.

## Patentansprüche

1. Registrierungsunterstützungsvorrichtung (11) zum Ermöglichen einer biometrischen Registrierung eines Benutzers einer kontaktlosen Chipkarte (1), die eine biometrische Anordnung (3) und eine Drahtlos-Energieübertragungsanordnung (5) aufweist, wobei die Registrierungsunterstützungsvorrichtung (11) umfasst:
einen Träger (15), der einen ersten Oberflächenabschnitt (17) zum Anordnen eines Mobiltelefons (13), das eine Drahtlos-Energieübertragungsanordnung enthält, und einen zweiten Oberflächenabschnitt (19), der von dem ersten Oberflächenabschnitt (17) beabstandet ist, zum Anordnen der kontaktlosen Chipkarte (1) aufweist; und
**gekennzeichnet durch**
einen elektrischen Leiter, der durch den Träger (15) gestützt wird und eine Leiterspirale (21) bildet, die eine innerste Umdrehung aufweist, die an einem ersten Leiterende (23) beginnt, das im Inneren der Leiterspirale (21) angeordnet ist, und eine äußerste Umdrehung aufweist, die an einem zweiten Leiterende (25) endet,
wobei die Leiterspirale (21) so eingerichtet ist, dass sie eine erste drahtlose Energieübertragungsverbindung mit der Drahtlos-Energieübertragungsanordnung des Mobiltelefons (13) bildet, wenn das Mobiltelefon auf dem ersten Oberflächenabschnitt (17) des Trägers angeordnet ist, und eine zweite drahtlose Energieübertragungsverbindung mit der Drahtlos-Energieübertragungsanordnung (5) der kontaktlosen Chipkarte (1) bildet, wenn die kontaktlose Chipkarte (1) auf dem zweiten Oberflächenabschnitt (19) des Trägers (15) angeordnet ist.

2. Registrierungsunterstützungsvorrichtung (11) nach Anspruch 1, wobei:
die äußerste Umdrehung der Leiterspirale um einen dritten Oberflächenabschnitt (27) des Trägers (15) herum verläuft; und
der dritte Oberflächenabschnitt des Trägers den ersten Oberflächenabschnitt (17) des Trägers und den zweiten Oberflächenabschnitt (19) des Trägers (15) überlappt.

3. Registrierungsunterstützungsvorrichtung (11) nach Anspruch 2, wobei der dritte Oberflächenabschnitt (27) des Trägers rechteckig ist.

4. Registrierungsunterstützungsvorrichtung (11) nach Anspruch 2 oder 3, wobei der dritte Oberflächenabschnitt (27) des Trägers (15) einen ersten länglichen Unterabschnitt (29a) mit einer ersten Breite (W1) und einen zweiten länglichen Unterabschnitt (29b) mit einer zweiten Breite (W2), die größer als die erste Breite (W1) ist, aufweist.

5. Registrierungsunterstützungsvorrichtung (11) nach Anspruch 4, wobei der erste längliche Unterabschnitt (29a) den ersten Oberflächenabschnitt (17) des Trägers (15) überlappt und der zweite längliche Unterabschnitt (29b) den zweiten Oberflächenabschnitt (19) des Trägers überlappt.

6. Registrierungsunterstützungsvorrichtung (11) nach einem der vorangehenden Ansprüche, wobei die Leiterspirale (21) auf den Träger (15) gedruckt ist.

7. Registrierungsunterstützungsvorrichtung (11) nach einem der vorangehenden Ansprüche, wobei der Träger (15) in Form eines Flachmaterials vorliegt.

8. Registrierungsunterstützungsvorrichtung (11) nach einem der vorangehenden Ansprüche, wobei der Träger (15) zellulosebasiert ist.

9. Biometrisches System (9), das umfasst:
die Registrierungsunterstützungsvorrichtung (11) nach einem der vorangehenden Ansprüche; und
eine kontaktlose Chipkarte (1), die eine biometrische Anordnung (3) und eine Drahtlos-Energieübertragungsanordnung (5) aufweist,
wobei die kontaktlose Chipkarte (1) auf dem zweiten Oberflächenabschnitt (19) des Trägers der Registrierungsunterstützungsvorrichtung (11) angeordnet ist.

10. Verfahren zum Registrieren eines Benutzers, der das biometrische System (9) nach Anspruch 9 und ein Mobiltelefon (13) hat, das eine Drahtlos-Energieübertragungsanordnung aufweist, die dafür ausgelegt ist, ein elektrisches Feld für die Energieübertragung neben einer Rückseite des Mobiltelefons (13) bereitzustellen, und ein Display aufweist, das auf einer Vorderseite des Mobiltelefons (13) angeordnet ist, wobei das Verfahren die folgenden Schritte umfasst:
Anleiten (601) des Benutzers, das Mobiltelefon (13) auf dem ersten Oberflächenabschnitt (17) des Trägers (15) der in dem biometrischen System (9) enthaltenen Registrierungsunterstützungsvorrichtung (11) so anzuordnen, dass die Rückseite des Mobiltelefons (13) dem ersten Oberflächenabschnitt (17) zugewandt ist;
Senden (602), durch das Mobiltelefon (12) an die kontaktlose Chipkarte (1), die auf dem zweiten Oberflächenabschnitt (19) des Trägers (15) angeordnet ist, eines Signals, das eine Anweisung an die kontaktlose Chipkarte (1) codiert, mit der Durchführung der biometrischen Registrierung zu beginnen; und
Empfangen (603), durch das Mobiltelefon (13) von der kontaktlosen Chipkarte (1), die auf dem zweiten Oberflächenabschnitt (19) des Trägers (15) angeordnet ist, nachdem die biometrische Registrierung vollendet wurde, eines Signals, das die Vollendung der biometrischen Erfassung angibt.

11. Verfahren nach Anspruch 10, wobei:
das Signal, das die Anweisung an die kontaktlose Chipkarte (1), eine biometrische Registrierung durchzuführen, codiert, über die erste Leiterspirale (21), die in der Registrierungsunterstützungsvorrichtung (11) enthalten ist, die in dem biometrischen System (9) enthalten ist, gesendet wird; und
das Signal, das angibt, dass die Registrierung vollendet wurde, über die zweite Leiterspirale (21), die in der Registrierungsunterstützungsvorrichtung (11) enthalten ist, die in dem biometrischen System (9) enthalten ist, empfangen wird.

12. Verfahren nach Anspruch 10 oder 11, das des Weiteren folgende Schritte umfasst:
Durchführen einer Benutzerauthentifizierung unter Verwendung des Mobiltelefons (13); und
Gestatten der Vollendung der biometrischen Registrierung nur dann, wenn die Benutzerauthentifizierung erfolgreich ist.

## Revendications

1. Dispositif d'aide à l'enregistrement (11), pour faciliter l'enregistrement biométrique d'un utilisateur d'une carte à puce sans contact (1) comprenant un agencement biométrique (3) et un agencement de transfert d'énergie sans fil (5), le dispositif d'aide à l'enregistrement (11) comprenant :
un support (15) comportant une première partie de surface (17) pour agencer un téléphone mobile (13) comprenant un agencement de transfert d'énergie sans fil, et une deuxième partie de surface (19), espacée de la première partie de surface (17), pour agencer la carte à puce sans contact (1) ; et **caractérisé par**
un conducteur électrique supporté par le support (15) et formant une spirale de conducteur (21) comportant un tour le plus intérieur commençant à une première extrémité de conducteur (23) agencée à l'intérieur de la spirale de conducteur (21) et un tour le plus extérieur se terminant à une deuxième extrémité de conducteur (25),
la spirale de conducteur (21) étant configurée pour former une première liaison de transfert d'énergie sans fil avec l'agencement de transfert d'énergie sans fil du téléphone mobile (13) lorsque le téléphone mobile est agencé sur la première partie de surface (17) du support, et une deuxième liaison de transfert d'énergie sans fil avec l'agencement de transfert d'énergie sans fil (5) de la carte à puce sans contact (1) lorsque la carte à puce sans contact (1) est agencée sur la deuxième partie de surface (19) du support (15).

2. Dispositif d'aide à l'enregistrement (11) selon la revendication 1, dans lequel :
le tour le plus extérieur de la spirale de conducteur délimite une troisième partie de surface (27) du support (15) ; et
la troisième partie de surface du support chevauche la première partie de surface (17) du support et la deuxième partie de surface (19) du support (15).

3. Dispositif d'aide à l'enregistrement (11) selon la revendication 2, dans lequel la troisième partie de surface (27) du support est rectangulaire.

4. Dispositif d'aide à l'enregistrement (11) selon la revendication 2 ou 3, dans lequel la troisième partie de surface (27) du support (15) comporte une première sous-partie allongée (29a) avec une première largeur (W1) et une deuxième sous-partie allongée (29b) avec une deuxième largeur (W2), plus grande que la première largeur (W1).

5. Dispositif d'aide à l'enregistrement (11) selon la revendication 4, dans lequel la première sous-partie allongée (29a) chevauche la première partie de surface (17) du support (15) et la deuxième sous-partie allongée (29b) chevauche la deuxième partie de surface (19) du support.

6. Dispositif d'aide à l'enregistrement (11) selon l'une quelconque des revendications précédentes, dans lequel la spirale de conducteur (21) est imprimée sur le support (15).

7. Dispositif d'aide à l'enregistrement (11) selon l'une quelconque des revendications précédentes, dans lequel le support (15) est prévu sous la forme d'une feuille.

8. Dispositif d'aide à l'enregistrement (11) selon l'une quelconque des revendications précédentes, dans lequel le support (15) est à base de cellulose.

9. Système biométrique (9) comprenant :
le dispositif d'aide à l'enregistrement (11) selon l'une quelconque des revendications précédentes ; et
une carte à puce sans contact (1) comprenant un agencement biométrique (3) et un agencement de transfert d'énergie sans fil (5),
dans lequel la carte à puce sans contact (1) est agencée sur la deuxième partie de surface (19) du support du dispositif d'aide à l'enregistrement (11).

10. Procédé d'enregistrement d'un utilisateur ayant le système biométrique (9) selon la revendication 9, et un téléphone mobile (13) comprenant un agencement de transfert d'énergie sans fil agencé pour fournir un champ électrique pour un transfert d'énergie adjacent à un côté arrière du téléphone mobile (13), et un dispositif d'affichage agencé sur un côté avant du téléphone mobile (13), le procédé comprenant les étapes suivantes :
le guidage (601) de l'utilisateur pour agencer le téléphone mobile (13) sur la première partie de surface (17) du support (15) du dispositif d'aide à l'enregistrement (11) compris dans le système biométrique (9), avec le côté arrière du téléphone mobile (13) faisant face à la première partie de surface (17) ;
la transmission (602), par le téléphone mobile (13) à la carte à puce sans contact (1) agencée sur la deuxième partie de surface (19) du support (15), d'un signal codant une instruction à la carte à puce sans contact (1) de commencer à réaliser un enregistrement biométrique ; et
la réception (603), par le téléphone mobile (13) depuis la carte à puce sans contact (1) agencée sur la deuxième partie de surface (19) du support (15), après l'achèvement de l'enregistrement biométrique, d'un signal indicatif de l'achèvement de l'enregistrement biométrique.

11. Procédé selon la revendication 10, dans lequel :
le signal codant l'instruction à la carte à puce sans contact (1) de réaliser un enregistrement biométrique est transmis via la spirale de conducteur (21) comprise dans le dispositif d'assistance à l'enregistrement (11) compris dans le système biométrique (9) ; et
le signal indiquant l'achèvement de l'enregistrement est reçu via la spirale de conducteur (21) comprise dans le dispositif d'aide à l'enregistrement (11) compris dans le système biométrique (9).

12. Procédé selon la revendication 10 ou 11, comprenant en outre les étapes suivantes :
la réalisation d'une authentification d'utilisateur à l'aide du téléphone mobile (13) ; et
la permission de l'achèvement de l'enregistrement biométrique uniquement si l'authentification d'utilisateur est réussie.
